# EUROPÄISCHE PATENTANMELDUNG

(11) **EP 1 561 927 A1**
(43) Veröffentlichungstag der Anmeldung: **10.08.2005**
(21) Anmeldenummer: 04100385.6
(22) Anmeldetag: 03.02.2004
(51) Int. Cl.: F02B 77/11, F16J 15/06, F16L 59/08

(54) **Abgaskrümmerdichtung mit Hitzeschild**

(71) Anmelder: Ford Global Technologies, LLC, A subsidary of Ford Motor Company, Dearborn, MI 48126 (US)
(72) Erfinder: Stoffels, Harald, 50735, Koeln (DE); Krzykowski, Heinrich, 58313, Herdecke (DE)
(74) Vertreter: Drömer, Hans-Carsten, Dipl.-Ing.

(57) **Zusammenfassung**

Die Erfindung betrifft ein System (1) mit Hitzeschild (2) und Abgaskrümmerdichtung (3), welches zum einen als Schutz einer Brennkraftmaschine vor dem aufgeheizten Abgaskrümmer und zum anderen zur Abdichtung des Abgastraktes d.h. zur Verhinderung des ungewollten Austritts von Abgas verwendet wird

Die Erfindung betrifft des weiteren ein Verfahren zur Montage eines derartigen Systems (1).

Es soll ein System (1) bereitgestellt werden, mit dem die aus dem Stand der Technik bekannten Nachteile überwunden werden, wobei die Kosten reduziert werden sollen, das System den konstruktiven Anforderungen im Hinblick auf einen möglichst geringen Raumbedarf entsprechen soll und insbesondere eine effektive thermische Abschirmung des Abgaskrümmers vom übrigen Motorraum gegeben sein soll.

Erreicht wird dies mit einem System (1), das dadurch gekennzeichnet, daß das Hitzeschild (2) und die Abgaskrümmerdichtung (3) miteinander verbunden sind.

Das Montageverfahren ist dadurch gekennzeichnet, daß das System (1) in einem Bereich zwischen dem Hitzeschild (2) und der Abgaskrümmerdichtung (3) gebogen wird, wobei dieser Biegevorgang vor oder nach dem Einbau der Abgaskrümmerdichtung (3) erfolgen kann.

## Beschreibung

Die Erfindung betrifft ein System mit einem Hitzeschild und einer Abgaskrümmerdichtung, welches zum einen als Schutz einer Brennkraftmaschine vor dem aufgeheizten Abgaskrümmer und zum anderen zur Abdichtung des Abgastraktes d. h. zur Verhinderung des ungewollten Austritts von Abgas verwendet wird.

Des Weiteren betrifft die Erfindung ein Verfahren zur Montage eines derartigen Systems.

Systeme der gattungsbildenden Art werden insbesondere in Brennkraftmaschinen für Kraftfahrzeuge eingebaut. Im weiteren wird kurz auf die einzelnen Bauteile des Systems, nämlich das Hitzeschild und die Abgaskrümmerdichtung, eingegangen, bevor auf das System an sich Bezug genommen wird.

Die Abgaskrümmerdichtung wird an der Schnittstelle zwischen Zylinderkopf und Abgaskrümmer angeordnet und dient der Abdichtung des Abgastraktes an dieser Stelle, an der der Krümmer am Zylinderkopf fixiert wird. In der Regel wird der Abgaskrümmer am Zylinderkopf mittels mehrerer Schrauben befestigt, wobei die zwischen Zylinderkopf und Abgaskrümmer angeordnete Dichtung durch die Schraubenkräfte komprimiert wird, um eine ausreichende Dichtigkeit zu gewährleisten. Die Abgaskrümmerdichtung soll den ungewollten Austritts von heißen Verbrennungsgasen zuverlässig verhindern, damit keine Abgase in den Motorraum des Kraftfahrzeuges strömen und dort aufgrund ihrer hohen Temperaturen zu Beschädigungen führen oder aber von dort in die Fahrgastzelle gelangen.

Um diese Aufgabe zu erfüllen, ist die Abgaskrümmerdichtung in der Regel aus mehreren Elementen verschiedener Materialien aufgebaut. Häufig kommen sogenannte Metallaminatdichtungen zum Einsatz, die aus mehreren Schichten aufgebaut sind. Diese können eine Weichstoffschicht aufweisen, welche von einer Metallschicht in der Art einer Fassung eingerahmt bzw. begrenzt wird. Dabei sind die in der Dichtung notwendigerweise vorzusehenden Öffnungen, nämlich die Durchgangslöcher für die Befestigungsschrauben einerseits und die Aussparungen für die Abgasaustrittsöffnungen andererseits, vorzugsweise mit sogenannten metallischen Ringeinsätzen versehen.

Die Metallschichten und metallischen Ringeinsätze geben der Dichtung eine gewisse Steifigkeit und Stabilität. Sie sind auch notwendig, um Verformungen des Abgaskrümmers und des Zylinderkopfes im Betrieb der Brennkraftmaschine auszugleichen. Sowohl der Abgaskrümmer als auch der Zylinderkopf sind mechanisch, insbesondere aber thermisch hochbelastete Bauteile, die sich im Betrieb mehr oder weniger stark und damit ungleichmäßig verformen. Auch unter diesen Betriebsbedingungen muß die Abgaskrümmerdichtung für eine zuverlässige Abdichtung sorgen.

Die Weichstoffschicht kann zur Reduktion des Porenvolumens mit Imprägniermittel behandelt werden. Hochbeanspruchte Bereiche können mit Siliconkautschuk bedruckt und die gesamte Dichtung zudem mit einem Top Coat überzogen werden.

Das Hitzeschild als zweite Komponente des Systems dient dazu, den Abgaskrümmer weitestgehend von den anderen im Motorraum befindlichen Bauteilen und Aggregaten abzuschirmen. Erforderlich wird dies, weil sich der Abgaskrümmer infolge der hohen Temperaturen des durch ihn hindurchströmenden Abgases stark aufheizt und große Wärmemengen durch Wärmestrahlung einerseits und Wärmeübergang an die ihn umgebende Luft andererseits abgibt bzw. abgeben will.

Insbesondere unter Berücksichtigung der Tatsache, daß im Motorraum zunehmend Kunststoffteile verwendet werden, soll ein zu hoher Wärmeübergang verhindert werden.

Die Aufheizung der im Motorraum befindlichen Luft durch den Abgaskrümmer kann aber auch zur Beeinträchtigung der Funktionstüchtigkeit des Antriebsaggregats im allgemeinen, insbesondere aber zur Beeinträchtigung der Qualität des Verbrennungsprozesses führen. Beispielsweise können die elektronischen, im Motorraum angeordneten Bauteile - elektrische Zündung, elektronische Einspritzung oder die Motorsteuerung - durch zu hohe Temperaturen geschädigt werden. Des weiteren kann warme Luft im Motorraum zu einer ungewollten Aufheizung des Ansaugtraktes und damit zur Aufheizung der durch den Ansaugtrakt zugeführten Verbrennungsluft führen, was sich nachteilig auf die Zylinderfüllung auswirkt.

Nach dem Stand der Technik wird der Hitzeschild motorseitig am Abgaskrümmer befestigt, wozu eine ausreichende Anzahl an Befestigungsmöglichkeiten bzw. Befestigungsmitteln vorzusehen ist. An seinem dem Motorblock abgewandten Ende wird das Hitzeschild wahlweise am Abgaskrümmer oder - falls vorhanden - an einem im Abgastrakt angeordneten Abgasturbolader fixiert.

Diese Ausbildung des Hitzeschildes weist zahlreiche Nachteile auf. Zum einen schließt ein derartiges Hitzeschild nicht bündig mit dem Motorblock ab, weshalb ein Teil des Abgaskrümmers, und zwar der thermisch am höchsten belastete Teil, frei liegt und nicht mit Hilfe des Hitzeschildes vom übrigen Motorraum abgeschirmt wird. Es besteht sozusagen eine ungewollte Lücke in der thermischen Abschirmung des Krümmers

Zum anderen muß eine ausreichende Anzahl an Befestigungsmitteln am Abgastrakt vorgesehen werden, was die Fertigung des Krümmers aufwendiger und damit kostenintensiver macht. Die Befestigungsmittel, in der Regel Schrauben, sorgen für eine Zunahme der Anzahl an Systembauteilen und damit für eine Zunahme der Bauteil- und Herstellungskosten. Eine hohe Anzahl an Bauteilen führt des weiteren zu hohen Bereitstellungskosten, da sämtliche Bauteile verfügbar gemacht werden müssen d.h. insbesondere verwaltet und gelagert werden müssen.

Die Montagezeit und damit die Montage- und Herstellungskosten steigen mit zunehmender Anzahl an Bauteilen. Es bieten sich zudem zahlreiche Gelegenheiten, bei der Fertigung der einzelnen Bauteile und bei deren Montage Fehler zu begehen, die sich auf die spätere Funktionstüchtigkeit und Lebensdauer des Systems nachteilig auswirken können.

Des Weiteren hat ein solches System einen vergleichsweise hohen Raumbedarf. Der hohe Raumbedarf resultiert zum einen daher, daß die Befestigungsmittel, in der Regel Flansche, Ösen, Naben und/oder Schrauben oder dergleichen, an sich schon voluminös sind und zum anderen diese Befestigungsmittel für Werkzeuge im Rahmen der Montage zugänglich sein müssen. Der hohe Raumbedarf steht dem Ziel der Konstrukteure, im Motorraum des Kraftfahrzeuges ein möglichst effektives d. h. dichtes Packaging der gesamten Antriebseinheit zu realisieren, entgegen.

Vor diesem Hintergrund ist es die Aufgabe der vorliegenden Erfindung, ein System mit Hitzeschild und Abgaskrümmerdichtung bereitzustellen, mit dem die aus dem Stand der Technik bekannten Nachteile überwunden werden, wobei die Kosten reduziert werden sollen, das System den konstruktiven Anforderungen im Hinblick auf einen möglichst geringen Raumbedarf entsprechen soll und insbesondere eine effektive thermische Abschirmung des Abgaskrümmers vom übrigen Motorraum gegeben sein soll.

Eine weitere Teilaufgabe der vorliegenden Erfindung ist es, ein Verfahren zur Montage eines derartigen Systems aufzuzeigen.

Gelöst wird die erste Teilaufgabe durch ein System mit Hitzeschild und Abgaskrümmerdichtung, das dadurch gekennzeichnet ist, daß das Hitzeschild und die Abgaskrümmerdichtung miteinander verbunden sind.

Bei dem erfindungsgemäßen System reicht das Hitzeschild bis direkt an den Motorblock heran und schließt mit diesem gewissermaßen bündig ab, so daß keine Lücke in der thermischen Abschirmung des Abgaskrümmers - wie bei herkömmlichen Systemen nach dem Stand der Technik - entsteht. Damit wird auch der thermisch am höchsten belastete Teil, nämlich das Anfangsstück des Abgaskrümmers, vom Motorraum abgeschirmt, denn das Hitzeschild wird bis an den Motorblock herangeführt. Dadurch wird die erste der Erfindung zugrunde liegende Teilaufgabe gelöst, nämlich ein System bereitzustellen, welches eine effektive thermische Abschirmung des Abgaskrümmers vom übrigen Motorraum gewährleistet.

Das erfindungsgemäße System ermöglicht zudem eine Senkung der Kosten. Die Abgaskrümmerdichtung wird nach der vorgeschlagenen erfindungsgemäßen Lehre für die motorseitige Befestigung des Hitzeschildes verwendet. Dabei wird einem zwingend erforderlichen Bauteil, nämlich der Abgaskrümmerdichtung, in vorteilhafter Weise neben der Hauptfunktion als Dichtungselement eine zweite Funktion als Befestigungsmittel zugewiesen. Die nach dem Stand der Technik üblicherweise zur Lagerung des Hitzeschildes motorseitig am Abgaskrümmer vorzusehenden Befestigungsmitteln - Flansche, Ösen, Naben und/oder Schrauben oder dergleichen - entfallen. Mit der Reduzierung der Anzahl an Bauteilen sinken auch die Bauteil- und Herstellungskosten sowie die Kosten für die Bereitstellung, insbesondere für die Verwaltung und die Lagerung. Der Krümmer wird konstruktiv weniger aufwendig und damit ebenfalls kostengünstiger.

Die Montagezeit und damit die Montagekosten werden reduziert. Es können sich weniger Fehler bei der Montage einschleichen, was sich positiv auf die Funktionstüchtigkeit und Lebensdauer des Systems auswirkt. Dadurch wird die zweite der Erfindung zugrunde liegende Teilaufgabe gelöst, nämlich ein System bereitzustellen, mit welchem die Kosten gesenkt werden.

Mit den nach dem Stand der Technik üblichen Befestigungsmitteln entfällt auch die konstruktive Anforderung, daß die - nunmehr nicht mehr vorhandenen - Befestigungsmittel für Montagezwecke einen Zugang für Werkzeuge aufzuweisen haben. Dadurch wird die dritte der Erfindung zugrunde liegende Teilaufgabe gelöst, nämlich ein System bereitzustellen, welches den konstruktiven Anforderungen im Hinblick auf einen möglichst geringen Raumbedarf entspricht und ein effektives Packaging zuläßt.

Im eingebauten Zustand ist das System in einem Bereich zwischen dem Hitzeschild und der Abgaskrümmerdichtung gebogen, wobei die Dichtung am Zylinderkopf anliegt und das Hitzeschild den vom Zylinderkopf weglaufenden Abgaskrümmer mantelförmig umgibt.

Vorteilhaft sind Ausführungsformen des Systems, bei denen das Hitzeschild und die Abgaskrümmerdichtung zur Ausbildung der Verbindung einteilig ausgebildet sind, so daß das System ein monolithisches Bauteil darstellt. Bei diesen Ausführungsformen braucht eine Verbindung zwischen Hitzeschild und Abgaskrümmerdichtung nicht in einem separaten Arbeitsschritt eingebracht werden, da die beiden Bauteile bereits zusammenhängend ausgebildet werden. Diese Ausführungsform erfordert aber in der Regel ein Montageverfahren, bei dem das System einem Biegevorgang unterworfen wird, um es in seine endgültige Form zu bringen. Es sei denn das System wird im gebogenen Zustand gefertigt.

Vorteilhaft sind daher in einigen Anwendungsfällen auch Ausführungsformen des Systems, bei denen das System modular aufgebaut ist und das Hitzeschild und die Abgaskrümmerdichtung zur Ausbildung der Verbindung miteinander verbindbar sind. Das Hitzeschild und die Abgaskrümmerdichtung können vor der Montage verbunden und gegebenenfalls einem Biegevorgang unterworfen werden. Die beiden Bauteile können aber auch separat eingebaut werden und nach ihrer Montage miteinander verbunden werden, was sich unter Umständen bei engen Platzverhältnissen im Motorraum anbietet.

Vorteilhaft sind Ausführungsformen des Systems, bei denen das Hitzeschild und die Abgaskrümmerdichtung stoffschlüssig miteinander verbunden sind.

Vorteilhaft sind dabei Ausführungsformen des Systems, bei denen das Hitzeschild und die Abgaskrümmerdichtung zur Ausbildung einer stoffschlüssigen Verbindung miteinander verklebt sind.

Dabei kommen die Vorteile dieser besonderen Verbindungsform zum Tragen. So kann eine Klebeverbindung ohne zusätzliche Werkzeuge eingebracht werden, was sich kostenreduzierend auswirkt. Eine Nachbearbeitung der eingebrachten Klebeverbindung ist in der Regel nicht erforderlich.

Vorteilhaft sind in einigen Anwendungsfällen Ausführungsformen des Systems, bei denen das Hitzeschild und die Abgaskrümmerdichtung zur Ausbildung einer stoffschlüssigen Verbindung miteinander verschweißt sind. Im Gegensatz zu der zuvor beschriebenen Klebeverbindung ist eine Schweißverbindung thermisch wesentlich höher belastbar, weshalb sich diese Ausführungsform bei Verbindungen in thermisch hoch belasteten Bereichen empfiehlt. Ein weiterer Vorteil dieser Verbindungsart ist die Tatsache, daß die Verbindung nahezu unmittelbar nach ihrem Einbringen gebrauchstüchtig d.h. belastbar ist. Eine Trockenzeit, wie sie bei manchen Klebeverbindungen zur Aushärtung des Klebstoffes erforderlich ist, entfällt.

Vorteilhaft sind aber auch Ausführungsformen des Systems, bei denen das Hitzeschild und die Abgaskrümmerdichtung zur Ausbildung einer Verbindung formschlüssig miteinander verbunden sind. Eine formschlüssige Verbindung kann beispielsweise mittels Nieten hergestellt werden. Andere Beispiele für formschlüssige Verbindungen werden noch weiter unten im Rahmen der Beschreibung anderer bevorzugter Ausführungsformen des Systems erläutert. In diesem Zusammenhang werden auch die Vorteile dieser Ausführungsformen deutlich werden.

Vorteilhaft sind Ausführungsformen des Systems, bei denen das Hitzeschild und die Abgaskrümmerdichtung zur Ausbildung einer Verbindung kraftschlüssig miteinander verbunden sind. Eine kraftschlüssige Verbindung kann beispielsweise mittels Schrauben hergestellt werden.

Vorteilhaft sind Ausführungsformen des Systems, bei denen die Abgaskrümmerdichtung mindestens eine Materialschicht aufweist, die sich zur Ausbildung der Verbindung zwischen Hitzeschild und Abgaskrümmerdichtung bis in das Hitzeschild hinein erstreckt. Bei dieser Ausführungsform wird ausgenutzt, daß sowohl das Hitzeschild als auch die Abgaskrümmerdichtung vorzugsweise aus mehrschichtigen Verbundmaterialien ausgebildet werden.

Das Hitzeschild weist dabei vorzugsweise eine Sandwichstruktur auf, bei der eine wärmedämmende Schicht von beiden Seiten von plattenförmigen Elementen begrenzt und gehalten wird. Wie oben bereits in der Einleitung zum Stand der Technik ausgeführt wurde, wird als Dichtung häufig eine mehrschichtige Metallaminatdichtung verwendet. Diese Dichtungen verfügen häufig über eine Weichstoffschicht, welche von einer Materialschicht in der Art einer Fassung eingerahmt bzw. begrenzt wird. Wird nun das System in der Art ausgebildet, daß das Hitzeschild und die Abgaskrümmerdichtung eine gemeinsame Schicht aufweisen, die sich durch beide Bauteile hindurch erstreckt, kann diese Schicht in vorteilhafter Weise zur Verbindung der Bauteile dienen. Dabei kann es sich bei der Verbindung um sowohl um eine formschlüssige als auch um eine stoffschlüssige Verbindung handeln.

Ein derartiges System kann dabei sowohl als einteilig ausgebildetes monolithisches Bauteil bezeichnet werden. Es kann aber auch als modular aufgebautes System angesehen werden, welches über eine formschlüssige, kraftschlüssige und/oder stoffschlüssige Verbindung in Form der verbindenden Schicht verfügt.

Vorteilhaft sind dabei Ausführungsformen des Systems, bei denen die mindestens eine Materialschicht eine Metallschicht ist. Eine derartige Schicht verfügt zum einen über die notwendige Festigkeit zur Ausbildung einer zuverlässigen und dauerhaften Verbindung. Zum anderen werden sowohl das Hitzeschild als auch die Abgaskrümmerdichtung gerne mit einer Metallschicht versehen, wobei diese Metallschicht dem Hitzeschild die notwendige thermische Wiederstandfähigkeit gibt und bei der Dichtung als Einfassung für eine eventuell vorhandene Weichstoffschicht dient.

Vorteilhaft sind dabei Ausführungsformen des Systems, bei denen die mindestens eine Metallschicht im wesentlichen Aluminium enthält. Dadurch können Systeme in Leichtbauweise bereitgestellt werden, die nur zu einer geringen Gewichtszunahme des gesamten Fahrzeuges führen.

Vorteilhaft sind in einigen Anwendungsfällen aber auch Ausführungsformen des Systems, bei denen die mindestens eine Metallschicht im wesentlichen Stahl enthält. So kann es beispielsweise bei thermisch sehr hoch belasteten Motoren erforderlich werden, bei der Fertigung des Hitzeschildes und der Dichtung als wesentlich widerstandfähigeren Werkstoff Stahl zu verwenden.

Vorteilhaft sind Ausführungsformen des Systems, bei denen zumindest die Abgaskrümmerdichtung mindestens eine Weichstoffschicht aufweist. Diese Schicht wird - wie die gesamte Dichtung - zwischen Abgaskrümmer und Zylinderkopf angeordnet und bei der Montage komprimiert, wodurch sie für eine ausreichende wirkungsvolle Abdichtung sorgt.

Vorteilhaft sind dabei Ausführungsformen des Systems, bei denen die Weichstoffschicht sich zur Ausbildung der Verbindung zwischen Hitzeschild und Abgaskrümmerdichtung bis in das Hitzeschild hinein erstreckt. Dabei kann die Weichstoffschicht in der Abgasdichtung die zuvor beschriebene Dichtfunktion übernehmen, während diese Schicht bei dem Hitzeschild die Aufgabe einer thermischen Isolierung hat.

Vorteilhaft sind des weiteren Ausführungsformen des Systems, bei denen die Weichstoffschicht zumindest im Bereich der Abgaskrümmerdichtung von mindestens einer Metallschicht in der Art einer Fassung eingerahmt ist, wobei sich vorzugsweise diese mindestens eine Metallschicht zur Ausbildung der Verbindung zwischen Hitzeschild und Abgaskrümmerdichtung bis in das Hitzeschild hinein erstreckt. Die mindestens eine Metallschicht gibt der Dichtung die notwendige Steifigkeit und Stabilität. Sie dient auch dazu, Verformungen des Abgaskrümmers und des Zylinderkopfes im Betrieb der Brennkraftmaschine auszugleichen. Die Vorteile der Verwendung einer Metallschicht zur Ausbildung der Verbindung zwischen Hitzeschild und Abgaskrümmerdichtung wurden bereits weiter oben erläutert.

Vorteilhaft sind Ausführungsformen des Systems, bei denen die Weichstoffschicht zumindest im Bereich der Abgaskrümmerdichtung von zwei Metallschichten in der Art einer Fassung eingerahmt ist, wobei eine Metallschicht an der Unterseite und eine Metallschicht an der Oberseite der Weichstoffschicht angeordnet ist, wobei sich die zwei Metallschichten vorzugsweise zur Ausbildung der Verbindung zwischen Hitzeschild und Abgaskrümmerdichtung bis in das Hitzeschild hinein erstrecken. Zwei Metallschichten erlauben zudem die Ausbildung des Hitzeschildes in der vorteilhaften Sandwichstruktur, bei der zwischen den beiden Metallschichten Dämmmaterial angeordnet wird.

Vorteilhaft sind Ausführungsformen des Systems, bei denen das System zwischen dem Hitzeschild und der Abgaskrümmerdichtung einen biegeweichen Bereich aufweist. Eine derartige Ausgestaltung des Systems erleichtert die Montage von Ausführungsformen die im Rahmen des Einbaus in einem Bereich zwischen dem Hitzeschild und der Abgaskrümmerdichtung gebogen werden müssen. Der Biegevorgang kann dabei vor oder nach dem Einbau der Abgaskrümmerdichtung erfolgen. Zusammenfassend kann gesagt werden, daß die Ausstattung des Systems mit einem biegeweichen Bereich immer dann nützlich ist, wenn das System für die Montage als flaches Bauteil bereitgestellt wird. Dies ist beispielsweise der Fall, wenn das System als flaches und zusammenhängendes monolithisches Bauteil gefertigt wird, oder aber ein modular aufgebautes System nach Einbringung der Verbindung gebogen werden muß.

Vorteilhaft sind dabei Ausführungsformen des Systems, bei denen das System zur Ausbildung des biegeweichen Bereiches zwischen dem Hitzeschild und der Abgaskrümmerdichtung perforiert ist. Vorteilhaft an einer derartigen Ausgestaltung des biegeweichen Bereichs ist, daß die Perforation in leichter Weise unter Zuhilfenahme von Stanzwerkzeugen eingebracht werden kann.

Vorteilhaft sind aber auch Ausführungsformen des Systems, bei denen das System zur Ausbildung des biegeweichen Bereiches zwischen dem Hitzeschild und der Abgaskrümmerdichtung einen dünneren Querschnitt aufweist. Ein sich derartig verjüngender bzw. verengender Querschnitt kann bereits bei der konstruktiven Auslegung des Systems berücksichtigt werden oder aber ähnlich wie bei der Perforation mittels Stanzwerkzeugen und Pressen am Ende des Fertigungsprozesses eingebracht werden. Im Gegensatz zur Perforation gewährleistet diese Ausführungsform jedoch eine unverändert gute und vollständige thermische Isolierung des Abgaskrümmers, während die die Perforation bildenden Löcher zu mehr oder weniger großen Lücken in der Isolierung führen.

Vorteilhaft sind Ausführungsformen des Systems, bei denen das System an dem von der Abgaskrümmerdichtung abgewandten Ende des Hitzeschildes Befestigungsmittel aufweist. Vorteilhaft ist diese Ausführungsform, weil sie zusätzlich zu der Dichtung, die als erste Fixierung dient, eine zweite Fixierung für das Hitzeschild vorsieht, mit der das Schild verdrehsteif in einer ganz definierten Position gehalten wird.

Vorteilhaft sind dabei Ausführungsformen des Systems, bei denen das System im eingebauten Zustand mit den Befestigungsmitteln an einem am Abgaskrümmer vorgesehenen Abgasturbolader fixiert ist. Mit dieser Ausführungsform wird der Verdichter des Abgasturboladers, in dem die Verbrennungsluft komprimiert wird, in vorteilhafter Weise vom heißen Abgaskrümmer isoliert, was sich positiv auf die Zylinderfüllung auswirkt d.h. eine hohe Luftmassenzufuhr gewährleistet. Ein eventuell hinter dem Verdichter angeordneter Ladeluftkühler wird dann ebenfalls durch das Hitzeschild in vorteilhafter Weise vom wärmeabgebenden Abgaskrümmer abgeschirmt.

Vorteilhaft sind Ausführungsformen des Systems, bei denen das Hitzeschild seitlich flügelförmige Zungen aufweist. Diese Zungen können im Rahmen der Montage um den Abgaskrümmer herum gebogen bzw. gefaltet werden, so daß das Hitzeschild den Abgaskrümmer einem Mantel gleich umhüllt. Dadurch wird der Abgaskrümmer über seinen gesamten Umfang von einer möglichst wenige Lücken aufweisenden Wärmedämmung umgeben.

Die verfahrensmäßige Teilaufgabe wird gelöst durch ein Montageverfahren für ein System mit Hitzeschild und Abgaskrümmerdichtung, bei dem
(a) die Abgaskrümmerdichtung zwischen Abgaskrümmer und Zylinderkopf einer Brennkraftmaschine eingebaut wird,
   und das dadurch gekennzeichnet ist, daß
(b) in einem weiteren Montageschritt das System in einem Bereich zwischen dem Hitzeschild und der Abgaskrümmerdichtung gebogen wird, wobei dieser Biegevorgang vor oder nach dem Montageschritt (a) erfolgen kann.

Systeme, die bereits im gebogenen Zustand gefertigt und für die Montage zur Verfügung gestellt werden, brauchen prinzipbedingt keinem weiteren Biegevorgang (b) während der Montage unterworfen werden. Ebenso ist bei Systemen, die modular aufgebaut sind und bei denen das Hitzeschild und die Abgaskrümmerdichtung einzeln eingebaut und dann miteinander verbunden werden, ein Biegevorgang (b) entbehrlich.

Das bereits für das erfindungsgemäße System Gesagte hat - soweit übertragbar - ebenfalls für das erfindungsgemäße Montageverfahren Gültigkeit. Darüber hinaus zeichnet sich das erfindungsgemäße Montageverfahren im Vergleich zu alternativen Verfahren für den Einbau eines gattungsbildenden Systems grundsätzlich dadurch aus, daß das Hitzeschild nach dem Einbau der Dichtung prinzipbedingt schon motorseitig fixiert ist, so daß kein Arbeitsschritt erforderlich ist, mit dem eben diese Befestigung des Schildes realisiert bzw. eingebracht wird. Das Schild muß lediglich in einfacher Wiese umgebogen werden, um so entsprechend dem Abgaskrümmer ausgerichtet zu sein.

Vorteilhaft sind bei Ausführungsformen des Systems, bei denen das Hitzeschild seitlich flügelförmige Zungen aufweist, Ausführungsformen des Montageverfahrens, bei denen die seitlichen flügelförmigen Zungen des Hitzeschildes in der Art umgebogen werden, daß sie den Abgaskrümmer ummanteln. Die Vorteile dieses Montageverfahrens wurden bereits oben im Rahmen der entsprechenden Ausführungsform des Systems erläutert.

Vorteilhaft sind bei Ausführungsformen des Systems, bei denen das System an dem Ende des Hitzeschildes, das von der Abgaskrümmerdichtung abgewandt ist, Befestigungsmittel aufweist, Ausführungsformen des Montageverfahrens, bei denen das System an dem der Abgaskrümmerdichtung abgewandten Ende des Hitzeschildes mittels dieser Befestigungsmittel fixiert wird.

Bei Brennkraftmaschinen, bei denen im Abgastrakt ein Abgasturbolader vorgesehen ist, sind Ausführungsformen des Montageverfahrens vorteilhaft, bei denen das System an dem Ende des Hitzeschildes, das der Abgaskrümmerdichtung gegenüberliegt, am Abgasturbolader fixiert wird. Die Vorteile dieser Verfahrensvariante ergeben sich wiederum aus der Beschreibung des hierzu korrespondierenden Systems, weshalb an dieser Stelle auf eine Wiederholung verzichtet werden soll.

Im folgenden wird die Erfindung anhand von fünf Ausführungsbeispielen gemäß den Figuren 1 bis 5 näher beschrieben. Hierbei zeigt:
- Fig. 1: schematisch in der Draufsicht eine erste Ausführungsform des Systems vor dem Einbau,
- Fig. 2: schematisch einen Längsschnitt eines Fragmentes einer zweiten Ausführungsform des Systems,
- Fig. 3: schematisch einen Längsschnitt eines Fragmentes einer dritten Ausführungsform des Systems,
- Fig. 4: schematisch einen Längsschnitt eines Fragmentes einer vierten Ausführungsform des Systems, und
- Fig. 5: schematisch einen Längsschnitt eines Fragmentes einer fünften Ausführungsform des Systems.

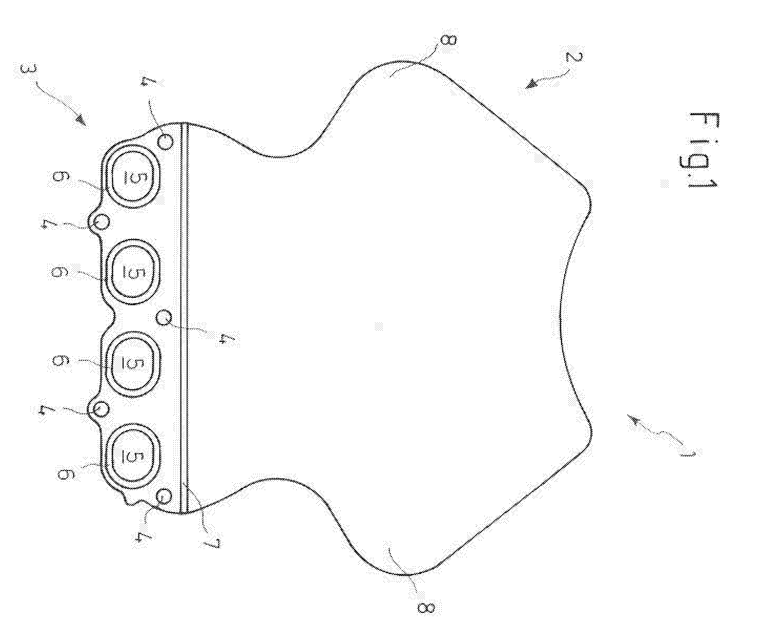

Figur 1 zeigt schematisch in der Draufsicht eine erste Ausführungsform des Systems 1 vor dem Einbau. Das dargestellte System 1 dient zum einen als Schutz einer Vierzylinder-Brennkraftmaschine vor dem aufgeheizten Abgaskrümmer und wird zum anderen zur Abdichtung des Abgastraktes d. h. zur Verhinderung des ungewollten Austritts von Abgas verwendet.

Das System 1 ist einteilig ausgeführt und umfaßt ein Hitzeschild 2 und eine Abgaskrümmerdichtung 3, die miteinander verbunden sind. Die Dichtung 3 ist mit mehreren Öffnungen 4,5 ausgestattet, wobei einerseits fünf Durchgangslöcher 4 für fünf Befestigungsschrauben und andererseits vier Aussparungen für die vier Abgasdurchtrittsöffnungen 5 der Vierzylinder-Brennkraftmaschine vorgesehen sind.

Der Abgaskrümmer wird mit fünf Schrauben am Zylinderkopf der Brennkraftmaschine befestigt, wobei die Abgaskrümmerdichtung 3 des Systems 1 zwischen Zylinderkopf und Abgaskrümmer angeordnet und mittels der Schraubenkräfte zwischen diesen Bauteilen komprimiert wird, wodurch sie eine zuverlässige Abdichtung des Abgastraktes gewährleistet. Die Abgasdurchtrittsöffnungen 5 werden dabei vorzugsweise - wie in Figur 1 dargestellt - mit metallischen Ringeinsätzen 6 versehen.

Im Rahmen der Montage muß das System 1 in einem Bereich 7 zwischen dem Hitzeschild 2 und der Abgaskrümmerdichtung 3 gebogen werden, wobei dieser Biegevorgang vor oder nach dem Einbau der Abgaskrümmerdichtung 3 erfolgen kann. Um diesen Montageschritt zu erleichtern, verfügt das System 1 zwischen dem Hitzeschild 2 und der Abgaskrümmerdichtung 3 über einen biegeweichen Bereich 7.

Bei der in Figur 1 dargestellten Ausführungsform des Systems 1 ist der biegeweiche Bereich 7 in Gestalt eines sich verjüngenden Querschnitts ausgebildet. Dieser kann bei der konstruktiven Auslegung des Systems 1 berücksichtigt werden oder aber mittels Stanzwerkzeugen am Ende des Fertigungsprozesses eingebracht werden.

Der Biegevorgang dient dazu, das Hitzeschild 2 des Systems 1 entlang des Abgaskrümmers in Position zu bringen bzw. in Richtung des Abgaskrümmers auszurichten. Danach erfolgt ein weiterer Biege- bzw. Faltvorgang, mit dem die beiden seitlich am Hitzeschild 2 angeordneten flügelförmigen Zungen 8 um den Abgaskrümmer herum gebogen werden, damit das Hitzeschild 2 den Abgaskrümmer mantelartig umhüllt und auf diese Weise für eine möglichst effektive und lückenlose thermische Abschirmung sorgt.

Die in Figur 1 dargestellte Ausführungsform des Systems 1 bzw. das Hitzeschild 2 dieses Systems 1 ist an seinem der Abgaskrümmerdichtung 3 abgewandten Ende nicht mit zusätzlichen Befestigungsmitteln versehen, so daß das Hitzeschild 2 nur über eine motorseitige Fixierung verfügt.

Dadurch, daß die motorseitige Fixierung mit Hilfe der Dichtung 3 realisiert wird, kann das Hitzeschild 2 im eingebauten Zustand bis an den Motorblock herangeführt werden, so daß es mit dem Motorblock bündig abschließt. Auf diese Weise schirmt das Hitzeschild 2 - im Gegensatz zu herkömmlichen Hitzeschilden - auch den thermisch am höchsten belasteten Teil des Abgaskrümmers, nämlich das Anfangsstück, gegenüber dem Antriebsaggregat ab.

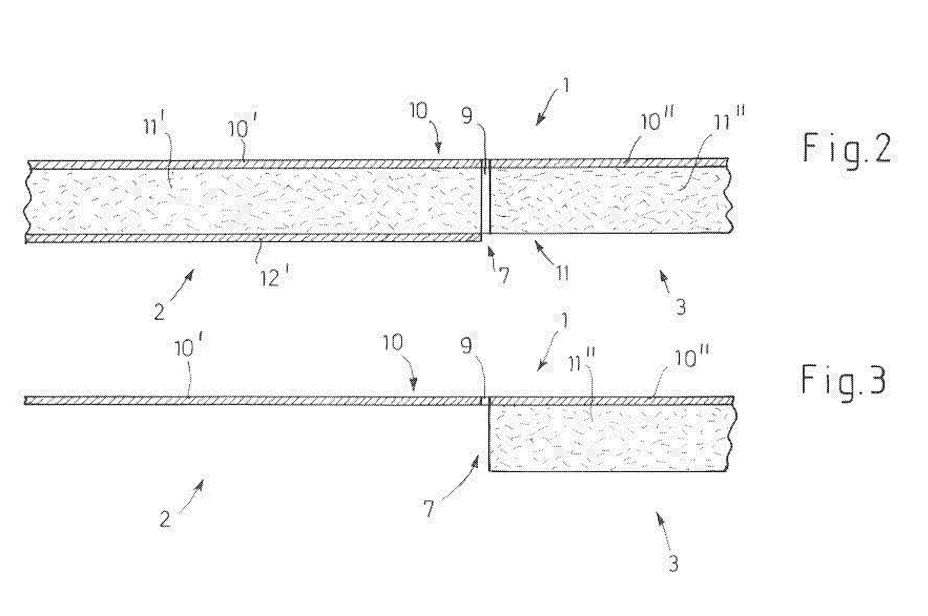

Im weiteren wird anhand einiger Beispiele gemäß der Figuren 2 bis 5 erörtert, auf welche Weise die Verbindung zwischen Hitzeschild 2 und Abgaskrümmerdichtung 3 realisiert werden kann.

Figur 2 zeigt schematisch einen Längsschnitt eines Fragmentes einer zweiten Ausführungsform des Systems 1. Dargestellt ist ein Teil des Hitzeschildes 2 und ein Teil der Abgaskrümmerdichtung 3, die beide miteinander verbunden sind.

Die Abgaskrümmerdichtung 3 ist als sogenannte Metallaminatdichtung 3 ausgebildet und verfügt über eine Weichstoffschicht 11 ", die von einer oberen Materialschicht 10", welche vorzugsweise aus Metall herzustellen ist, abgedeckt wird. Die obere Materialschicht 10" rahmt dabei die Weichstoffschicht 11" in der Art einer Fassung ein (nicht dargestellt).

Das Hitzeschild 2 ist ebenfalls mehrschichtig ausgebildet, wobei eine zentral angeordnete Weichstoffschicht 11' von zwei Materialschichten 10', 12' begrenzt wird. Die Verbindung zwischen Hitzeschild 2 und Abgaskrümmerdichtung 3 wird dadurch hergestellt, daß die Weichstoffschicht 11 und die obere Materialschicht 10 sich durch beide Bauteile 2,3 erstreckt. Dabei haben die beiden Teile 11',11" der Weichstoffschicht 11 und die beiden Teile 10',10" der oberen Materialschicht 10 bei den beiden Bauteilen 2,3 unterschiedliche Funktion.

Das Hitzeschild 2 weist eine Sandwichstruktur auf, bei der die wärmedämmende Weichschicht 11' von beiden Seiten von plattenförmigen Elementen 10', 12' begrenzt und gehalten wird. Hier dient die Weichstoffschicht 11' als thermische Isolierung.

Die mehrschichtige Metallaminatdichtung 3 verfügt über eine Weichstoffschicht 11", um eine ausreichende Dichtfunktion zu gewährleisten. Diese Weichstoffschicht 11" wird von einer oberen Materialschicht 10" in der Art einer Fassung eingerahmt bzw. begrenzt wird, um der Dichtung 3 einerseits die notwendige Stabilität zu geben und andererseits Verformungen von Zylinderkopf und Abgaskrümmer während des Betriebes der Brennkraftmaschine zu kompensieren.

Gemäß Figur 2 wird nun das System 1 in der Art ausgebildet, daß das Hitzeschild 2 und die Abgaskrümmerdichtung 3 zwei gemeinsamen Schichten 10,11 aufweisen, die sich durch beide Bauteile 2,3 hindurch erstrecken und zur Verbindung der beiden Bauteile dienen.

Um den für die Montage des Systems 1 erforderlichen Biegevorgang zu erleichtern, ist das System 1 im Bereich zwischen dem Hitzeschild 2 und der Abgaskrümmerdichtung 3 mit einem biegeweichen Bereich 7 ausgestattet, der bei der in Figur 2 dargestellten Ausführungsform in Gestalt einer Perforation 9 ausgebildet ist.

Figur 3 zeigt schematisch einen Längsschnitt eines Fragmentes einer dritten Ausführungsform des Systems 1.

Im Unterschied zu der in Figur 2 dargestellten Ausführungsform verfügt das Hitzeschild 2 dieser Ausführungsform nur über eine obere Materialschicht 10'. Eine Weichstoffschicht 11' und eine untere Materialschicht 12' sind nicht vorhanden. Die Verbindung des Hitzeschildes 2 mit der Abgaskrümmerdichtung 3 wird dabei mit Hilfe der oberen Materialschicht 10 hergestellt. Im übrigen wird bezug genommen auf Figur 2. Für dieselben Bauteile wurden dieselben Bezugszeichen verwendet.

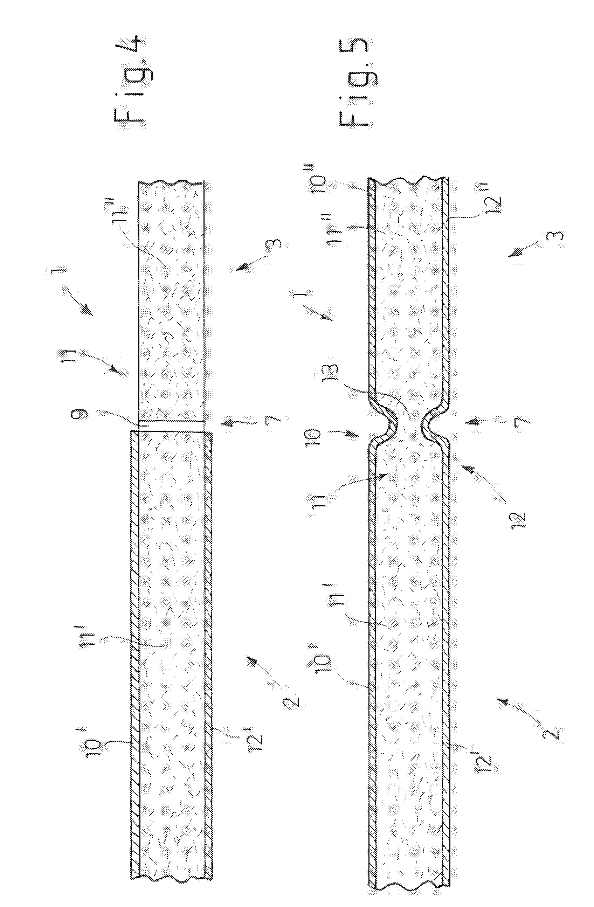

Figur 4 zeigt schematisch einen Längsschnitt eines Fragmentes einer vierten Ausführungsform des Systems 1.

Im Unterschied zu der in Figur 2 dargestellten Ausführungsform verfügt die Abgaskrümmerdichtung 3 dieser Ausführungsform nur über eine Weichstoffschicht 11". Eine obere Materialschicht 10" und eine untere Materialschicht 12" sind nicht vorhanden. Die Verbindung des Hitzeschildes 2 mit der Abgaskrümmerdichtung 3 wird dabei ausschließlich über die Weichstoffschicht 11 hergestellt. Im übrigen wird bezug genommen auf Figur 2. Für dieselben Bauteile wurden dieselben Bezugszeichen verwendet.

Figur 5 zeigt schematisch einen Längsschnitt eines Fragmentes einer fünften Ausführungsform des Systems 1.

Im Unterschied zu der in Figur 2 dargestellten Ausführungsform verfügt die Abgaskrümmerdichtung 3 dieser Ausführungsform über eine Weichstoffschicht 11", die sowohl von einer oberen Materialschicht 10" als auch von einer unteren Materialschicht 12" begrenzt wird. Ein weiterer Unterschied besteht darin, daß der biegeweiche Bereich 7 nicht in Gestalt eine Perforation ausgebildet ist, sondern dadurch realisiert wird, daß sich der Querschnitt 13 des Systems 1 an dieser Stelle verengt. Die Verbindung des Hitzeschildes 2 mit der Abgaskrümmerdichtung 3 wird dabei mit Hilfe aller drei Schichten 10,11,12 realisiert. Im übrigen wird bezug genommen auf Figur 2. Für dieselben Bauteile wurden dieselben Bezugszeichen verwendet.

### Bezugszeichen

- 1: System
- 2: Hitzeschild
- 3: Abgaskrümmerdichtung
- 4: Durchgangsloch, Öffnung
- 5: Aussparung, Abgasdurchtrittsöffnung
- 6: Ringeinsatz
- 7: biegeweicher Bereich
- 8: Zunge
- 9: Perforation
- 10: obere plattenförmige Materialschicht
- 10': obere Materialschicht im Bereich des Hitzeschildes
- 10": obere Materialschicht im Bereich der Abgaskrümmerdichtung
- 11: Weichstoffschicht
- 11': Weichstoffschicht im Bereich des Hitzeschildes
- 11": Weichstoffschicht im Bereich der Abgaskrümmerdichtung
- 12: untere plattenförmige Materialschicht
- 12': untere Materialschicht im Bereich des Hitzeschildes
- 12": untere Materialschicht im Bereich der Abgaskrümmerdichtung
- 13: verengter Querschnitt

## Patentansprüche

1. System (1) mit Hitzeschild (2) und Abgaskrümmerdichtung (3), welches zum einen als Schutz einer Brennkraftmaschine vor dem aufgeheizten Abgaskrümmer und zum anderen zur Abdichtung des Abgastraktes d. h. zur Verhinderung des ungewollten Austritts von Abgas verwendet wird, und das
**dadurch gekennzeichnet ist,**
**daß** das Hitzeschild (2) und die Abgaskrümmerdichtung (3) miteinander verbunden sind.

2. System (1) nach Anspruch 1,
**dadurch gekennzeichnet, daß**
das Hitzeschild (2) und die Abgaskrümmerdichtung (3) zur Ausbildung der Verbindung einteilig ausgebildet sind, so daß das System (1) ein monolithisches Bauteil darstellt.

3. System (1) nach Anspruch 1,
**dadurch gekennzeichnet, daß**
das System (1) modular aufgebaut ist und das Hitzeschild (2) und die Abgaskrümmerdichtung (3) zur Ausbildung der Verbindung miteinander verbindbar und verbunden sind.

4. System (1) nach Anspruch 3,
**dadurch gekennzeichnet, daß**
das Hitzeschild (2) und die Abgaskrümmerdichtung (3) stoffschlüssig miteinander verbunden sind.

5. System (1) nach Anspruch 4,
**dadurch gekennzeichnet, daß**
das Hitzeschild (2) und die Abgaskrümmerdichtung (3) zur Ausbildung einer stoffschlüssigen Verbindung miteinander verklebt sind.

6. System (1) nach Anspruch 4,
**dadurch gekennzeichnet, daß**
das Hitzeschild (2) und die Abgaskrümmerdichtung (3) zur Ausbildung einer stoffschlüssigen Verbindung miteinander verschweißt sind.

7. System (1) nach einem der Ansprüche 3 bis 6,
**dadurch gekennzeichnet, daß**
das Hitzeschild (2) und die Abgaskrümmerdichtung (3) zur Ausbildung einer Verbindung formschlüssig miteinander verbunden sind.

8. System (1) nach einem der Ansprüche 3 bis 7,
**dadurch gekennzeichnet, daß**
das Hitzeschild (2) und die Abgaskrümmerdichtung (3) zur Ausbildung einer Verbindung kraftschlüssig miteinander verbunden sind.

9. System (1) nach einem der vorherigen Ansprüche,
**dadurch gekennzeichnet, daß**
die Abgaskrümmerdichtung (3) mindestens eine Materialschicht (10,11,12) aufweist, die sich zur Ausbildung der Verbindung zwischen Hitzeschild (2) und Abgaskrümmerdichtung (3) bis in das Hitzeschild (2) hinein erstreckt.

10. System (1) nach Anspruch 9,
**dadurch gekennzeichnet, daß**
die mindestens eine Materialschicht (10,12) eine Metallschicht (10,12) ist.

11. System (1) nach Anspruch 10,
**dadurch gekennzeichnet, daß**
die mindestens eine Metallschicht (10,12) im wesentlichen Aluminium enthält.

12. System (1) nach Anspruch 10,
**dadurch gekennzeichnet, daß**
die mindestens eine Metallschicht (10,12) im wesentlichen Stahl enthält.

13. System (1) nach einem der vorherigen Ansprüche,
**dadurch gekennzeichnet, daß**
zumindest die Abgaskrümmerdichtung (3) mindestens eine Weichstoffschicht (11") aufweist.

14. System (1) nach Anspruch 13,
**dadurch gekennzeichnet, daß**
die mindestens eine Weichstoffschicht (11) sich zur Ausbildung der Verbindung zwischen Hitzeschild (2) und Abgaskrümmerdichtung (3) bis in das Hitzeschild (2) hinein erstreckt.

15. System (1) nach Anspruch 13 oder 14,
**dadurch gekennzeichnet, daß**
die Weichstoffschicht (11,11") zumindest im Bereich der Abgaskrümmerdichtung (3) von mindestens einer Metallschicht (10",12") in der Art einer Fassung eingerahmt ist.

16. System (1) nach Anspruch 15,
**dadurch gekennzeichnet, daß**
sich die mindestens eine Metallschicht (10,12) zur Ausbildung der Verbindung zwischen Hitzeschild (2) und Abgaskrümmerdichtung (3) bis in das Hitzeschild (2) hinein erstreckt.

17. System (1) nach Anspruch 13 oder 14
**dadurch gekennzeichnet, daß**
die Weichstoffschicht (11,11") zumindest im Bereich der Abgaskrümmerdichtung (3) von zwei Metallschichten (10",12") in der Art einer Fassung eingerahmt ist, wobei eine Metallschicht (12") an der Unterseite und eine Metallschicht (12") an der Oberseite der Weichstoffschicht (1,11") angeordnet ist

18. System (1) nach Anspruch 17,
**dadurch gekennzeichnet, daß**
sich die zwei Metallschichten (10,12) zur Ausbildung der Verbindung zwischen Hitzeschild (2) und Abgaskrümmerdichtung (3) bis in das Hitzeschild (2) hinein erstrecken.

19. System (1) nach einem der vorherigen Ansprüche,
**dadurch gekennzeichnet, daß**
das System (1) zwischen dem Hitzeschild (2) und der Abgaskrümmerdichtung (3) einen biegeweichen Bereich (7) aufweist.

20. System (1) nach Anspruch 19,
**dadurch gekennzeichnet, daß**
das System (1) zur Ausbildung des biegeweichen Bereiches (7) zwischen dem Hitzeschild (2) und der Abgaskrümmerdichtung (3) perforiert ist.

21. System (1) nach Anspruch 19,
**dadurch gekennzeichnet, daß**
das System (1) zur Ausbildung des biegeweichen Bereiches (7) zwischen dem Hitzeschild (2) und der Abgaskrümmerdichtung (3) einen dünneren Querschnitt (13) aufweist.

22. System (1) nach einem der vorherigen Ansprüche,
**dadurch gekennzeichnet, daß**
das System (1) an dem der Abgaskrümmerdichtung (3) abgewandten Ende des Hitzeschildes (2) Befestigungsmittel aufweist.

23. System (1) nach Anspruch 22,
**dadurch gekennzeichnet, daß**
das System (1) im eingebauten Zustand mit den Befestigungsmitteln an einem am Abgaskrümmer vorgesehenen Abgasturbolader fixiert ist.

24. System (1) nach einem der vorherigen Ansprüche,
**dadurch gekennzeichnet, daß**
das Hitzeschild (2) seitlich flügelförmige Zungen (8) aufweist.

25. Montageverfahren für ein System (1) mit Hitzeschild (2) und Abgaskrümmerdichtung (3) nach einem der vorherigen Ansprüche, bei dem
(a) die Abgaskrümmerdichtung (3) zwischen Abgaskrümmer und Zylinderkopf einer Brennkraftmaschine eingebaut wird,
und das **dadurch gekennzeichnet ist, daß**
(b) in einem weiteren Montageschritt das System (1) in einem Bereich zwischen dem Hitzeschild (2) und der Abgaskrümmerdichtung (3) gebogen wird, wobei dieser Biegevorgang vor oder nach dem Montageschritt (a) erfolgen kann.

26. Montageverfahren nach Anspruch 25 für ein System nach Anspruch 24,
**dadurch gekennzeichnet, daß**
(c) die seitlichen flügelförmigen Zungen (8) des Hitzeschildes (2) umgebogen werden in der Art, daß sie den Abgaskrümmer ummanteln.

27. Montageverfahren nach Anspruch 25 oder 26 für ein System (1) nach Anspruch 22 oder 23,
**dadurch gekennzeichnet, daß**
■ das System (1) an dem der Abgaskrümmerdichtung (3) abgewandten Ende des Hitzeschildes (2) fixiert wird.

28. Montageverfahren nach Anspruch 27,
**dadurch gekennzeichnet, daß**
■ das System (1) an dem der Abgaskrümmerdichtung (3) abgewandten Ende des Hitzeschildes (2) an einem am Abgaskrümmer vorgesehenen Abgasturbolader fixiert wird.
